Europäisches Patentamt

European Patent Office

Office européen des brevets

(19)

(11) Publication number: **0 095 716**
A2

# EUROPEAN PATENT APPLICATION

(21) Application number: **83105159.4**

(22) Date of filing: **25.05.83**

(51) Int. Cl.³: **H 04 N 1/40**

(30) Priority: **28.05.82 GB 8215672**

(43) Date of publication of application: **07.12.83 Bulletin 83/49**

(84) Designated Contracting States: **BE DE FR IT NL**

(71) Applicant: **Linotype-Paul Limited, Chelham House Bath Road, Cheltenham GL53 7LS (GB)**

(72) Inventor: **Adsett, David Edward Murray, 18 Carisbrooke Drive, Charlton Kings Cheltenham GL 52 6YA (GB)**

(74) Representative: **Bryant, Frank, Linotype & Machinery Limited Norman Road, Altrincham Cheshire WA 14 4ES (GB)**

(54) **Mapping ram for a modulated display.**

(57) In a display, a screen RAM contains a memory location for each pixel. A mapping RAM contains a number of values corresponding to the display intensity range. The mapping RAM is substantially smaller than the screen RAM. A change in the input-output intensity characteristic requires only a change to affected values in the mapping RAM without changing the greater number of locations in the screen RAM corresponding to those affected values.

## DESCRIPTION
### MAPPING RAM FOR A MODULATED DISPLAY
### Field of the Invention

This invention relates to graphics editing ter-
minals and displays, particularly interactive displays
which may be manipulated through a keyboard or other
input device by an operator to vary the range of halftones displayed.

### Background of the Prior Art

Halftone displays using various display mediums are
known in the prior art. For example, halftones have
been used for printing reproductions from continuous
toned originals as shown in U.S. Patent 2,294,643 and
U.S. Patent 4,151,653. Also known is the real time
halftone printing with a slow scan video system and by
using clusters of ordered uniform printing protrusions
as shown in U.S. Patent 3,474,192. CRTs for producing
halftones have been shown in U.S. Patent 2,304,163 and
U.S. Patent 3,688,026. Shown in these patents are systems for modulating a light spot to simulate a halftone. U.S. Patent 2,304,163 shows varying the shape of
a scanning spot as well as the size of the scanning
spot. U.S. Patent 3,688,026 shows varying the area of a
finite spot appearing on a CRT screen.

### SUMMARY OF THE INVENTION

An interactive graphics editing terminal is
described. The editing terminal contains a soft display
such as a CRT (cathode ray tube) or similar device which
may be instantaneously changed. In connection there-

with, a processing system is used for rapidly changing the information displayed on the screen in response to changes made by an operator through an input keyboard or other similar device.

The graphics editing terminal is designed to be included in a system employing a scanner or similar means for converting continuous tone information into a series of electronically stored information. Associated with the terminal is a means for identifying and correlating the picture elements (pixels) on the display with the location of a writing means such as a CRT electronic beam or a laser beam or other suitable means for placing information on the display at a location corresponding to the movement of the writing means and means for storing and altering signals such as digital signals, for modulating the writing means and for manipulating said digital signals to vary said modulation and to vary the information displayed.

All of the above is described with reference to the preferred embodiment which should not be viewed as limiting the invention. The preferred embodiment includes a CRT display output and a screen control processor input end. The screen control processor, as is known in the art, controls the movement of the electron beam and tracks the location of the beam as it moves from pixel to pixel on the face of the display. All other functions such as the cursor shape and location of the cursor are controlled by the screen control processor through a screened bit map store storing such functions as the cursor shape, guidelines and rules, and scan control and cursor circuits which control movement of the cursor and the scanning apparatus.

The continuous tone information may be scanned or converted by other means into a series of electronic signals. These signals in the preferred embodiment are digital and represent quantized scanned analog information at various digital levels corresponding to the intensity or amount of gray tone information. The digital signal is provided as a 6 bit word for each intensity level of quantized continuous tone information. The 6 bit signal corresponding to the continuous tone or gray tone level information may also be an 8 bit signal as will be seen in the detailed description of the preferred embodiment. The quantized digital information corresponding to the data is then loaded into a mapping ram and into address locations defined by a 6 bit digital word. The screen control processor loads into a screen sample store or refresh ram the address locations of the continuous tone information within the mapping ram. The address locations are located in the refresh ram at locations that are accessed by the scan control and cursor circuits and which correspond to locations on the CRT display. As the CRT electronic beam writing means is moved from pixel to pixel, its location is tracked, as for example, by a series of X and Y counters, and address locations in the refresh memory corresponding to the X and Y register values may be accessed, or any other suitable scheme may be used. These locations contain the address in the mapping ram of the modulation level or intensity level given in either a 6 or an 8 bit word for that corrresponding pixel. This 6 or 8 bit digital intensity level is then accessed in time with the movement of the electron beam and provided to a Digital to Analog (D to A) convertor where it is used to modulate the electron beam causing intensity modulation of the beam and a Gaussian distribution of the beam spot or halftone dot at that pixel.

While the intensity of the halftone dot (dot) varies with the intensity of the modulation signal, and the dot remains the same in size, the appearance of the overall dot size, produced by the Gaussian distribution, appears related to the intensity level. The pixels or dots that are modulated are separated by background area which is dark or unenergized and unilluminated in the preferred embodiment and frame the halftone dots. The pixels and dots are defined by the timed sequence of the pulses modulating the CRT beam. The pulses are amplitude modulated and in the preferred embodiment, of a constant width. The timed width is related to the size of the dot or pixel and its amplitude is related to the intensity of the dot. Due to the Gaussian distribution of the light from the dot, as the dot increases in intensity, the size of the dot appears to grow, giving the dot an enlarged appearance. The pulses modulating the dots are horizontally offset on alternate lines. In the preferred embodiment, the horizontal offset is one-half the spacing of the dots on the alternate or preceding and successive lines, so the dots on the display are at a 45° angle to each other, relative to the 0° or the horizontal and the 90° or the vertical display angles.

According to another feature of the invention, a mapping ram is provided which is loaded with the digital words containing the intensity or modulation information for the CRT beam. This intensity information is loaded in 64 addressable locations within a mapping ram. A screen sample store or refresh ram contains the addresses of the mapping ram which may also be the same intensity information. The refresh address is given by the scan control and cursor circuits relative to the movement of the beam and its pixel location. The address of that location is in the refresh memory corresponding to the appropriate intensity level for the particular pixel or location of the writing means. Additionally, means are provided for varying the levels of the intensity information in the mapping ram according to a predetermined algorithm. As the number of intensity levels is limited as in the case of the preferred embodiment to 64, a savings is achieved by modifying the mapping ram and the limited number of intensity levels therein as compared to the requirement of going through all the intensity levels in the refresh memory corresponding to the locations of the pixels on the screen and modifying those levels.

Additionally shown is the use of the halftone information to define the edges of line graphics. The dots for line graphics are all in aligned columns and rows relative to the horizontal and vertical display axes. The spatial and angular relationship of the dots may be varied from that of the preferred embodiment described above. According to the preferred embodiment where the halftone intensity information for modulating the beam is given in 6 bits, the line graphic intensity levels are given in digital words of 3 bits each so the same store area may be used for twice the number of dots needed for line work.

These and other features of the invention will be seen in connection with the detailed description of the invention as shown below.

### BRIEF DESCRIPTION OF THE DRAWINGS

Fig. 1 is a graphics terminal.

Fig. 2 is a portion of the graphics display showing the angular relationship of the elemental halftone dot areas.

Fig. 3 shows the manner of pulse modulating the elemental halftone areas and the Gaussian distribution therefrom.

Fig. 4 shows the effect of changes in the Gaussian distribution on the perceived intensity of the halftone area.

Fig. 5 shows a system for storing and accessing data corresponding to intensity levels for modulating the display of Fig. 2.

Fig. 6 shows the relationship between input and output intensity and the effect on that relationship by a change in the value of an intensity word.

Fig. 7 shows the new relationship caused by changes in intensity values along selected points.

Fig. 8 shows the manner in which the edges of line graphic information may be displayed by halftone intensity modulation of the elemental areas intersected by the edge.

## DETAILED DESCRIPTION OF THE INVENTION

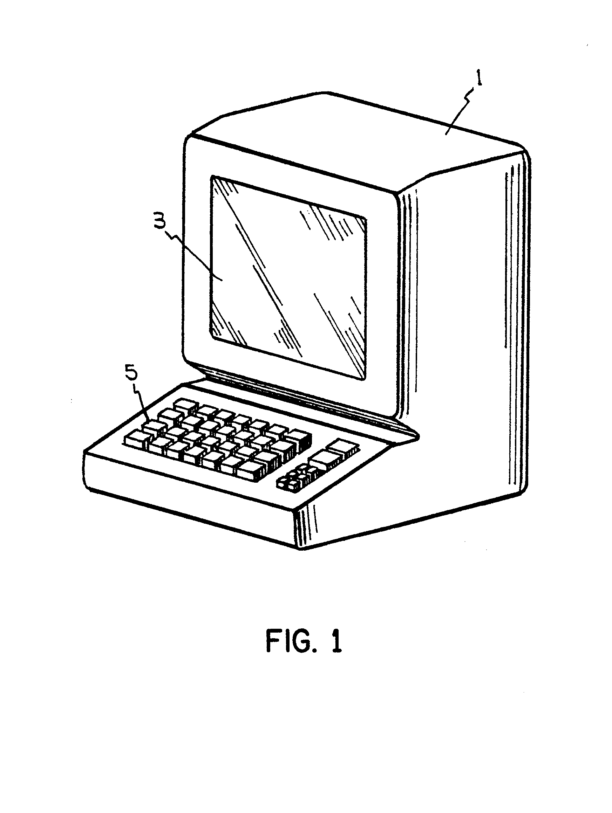

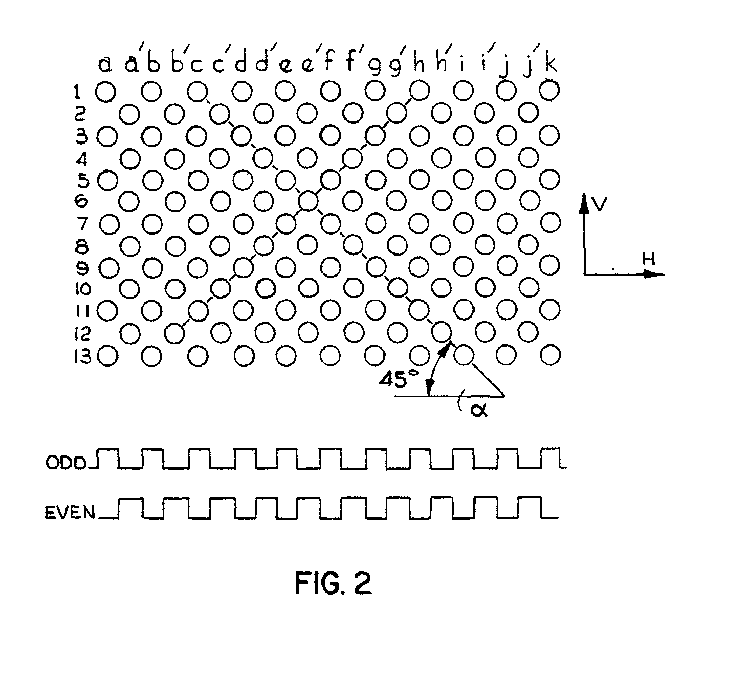

Fig. 1 shows a graphic display (1) having a screen (3) and an input device (5). The screen in the preferred embodiment is a CRT screen but may be any other suitable screen or soft display device which can be made interactive with the operator's commands. The input device (5) is shown as a keyboard but may be any other suitable device which can be used by an operator to alter the display screen (3). The terminal is interactive meaning that the commands given to the graphic terminal result in a responsive modification or transition of the screen display in a short time after the command is given to the terminal. The screen display reproduces an image by means of a series of pixels shown in Fig. 2. The pixels are picture elements or elemental areas which are imaged by means of modulating an imaging means. The imaging means in the case of the preferred embodiment is a CRT electron beam, but may be any other imaging means such as a laser or solid state display. The arrangement of the pixels on the face of the diplay is shown by a representative number of lines, 1 through 13, forming a portion of the display. The picture elements are arranged in a matrix in odd numbered rows 1 through 13 and columns a through k and in even numbered rows, 2-8, in columns a'-j'. The pulse amplitude modulation is shown in a representative manner for the odd and even rows with the same level of amplitude modulation for all pulses. The timing or phase of the pulses is shifted between separate lines such as odd and even rows, spatially displacing the dots at an angle to each other. The dot staggering may be varied to vary the resolution angular relationship as desired. As shown for the preferred embodiment, the angle of the dots is 45° relative to the horizontal and vertical axes (H and V) shown.

A tone control system is provided to vary the intensity of the writing means which modulates the dots from 0 to 100% gray. Although the sizes of the halftone dot may be varied, by varying the pulse width in the preferred embodiment, the dot size is constant. The intensity of the modulation causes a Gaussian distribution of the dot tone, giving an appearance of a larger dot for increasing intensity levels of modulation.

Generally, as can be seen from Fig. 2 to achieve the angular orientation as shown by angle alpha at 45° for the preferred embodiment, the dots alternate in the column positions for alternate rows. Generally it may be seen that if for row N, column positions M, M+2, M+4, etc., are dots or elemental areas then for row N+1, columns M+1, M+3, M+5, etc., are dots or elemental areas.

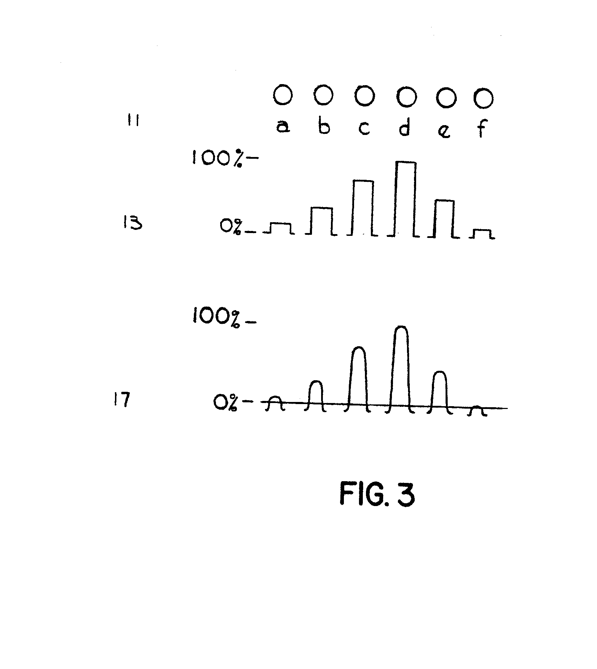

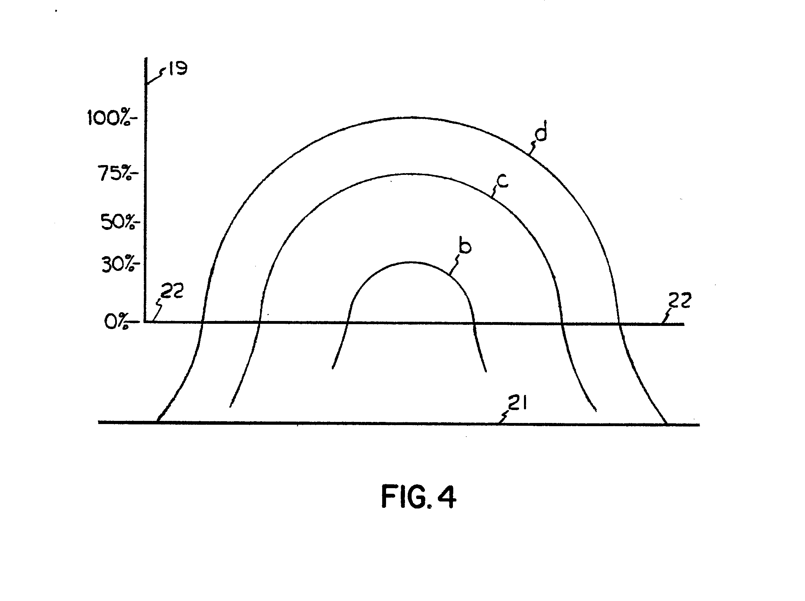

In Fig. 3 is shown a series of halftone dot areas, modulated by a series of pulses. The dot areas are shown as 11a, 11b, 11c, 11d, 11e and 11f. The modulating pulse for each respesctive dot area is shown as a series of pulses in row 13, varying from approximately 10% gray level for dot area 11a to 100% for dot area 11d, and then back to 10% for dot area 11f. The Gaussian distribution of the tone produced in each dot area by the respective pulse is shown in line 17. For increasing pulse height as shown by pulse 11d, compared to pulse 11a, the intensity level of the Gaussian distribution increases. As the intensity level increases, so the size of the dot increases. This is diagramatically shown in Fig. 4 where the intensity level shown by the ordinate 19 and the spatial distribution of the dot over the display shown by the abscissa 21. As the pulse height increases, the intensity of the Gaussian distribution increases as well as the spatial distribution of the Gaussian distribution. Relative to a perception level, shown as 22, the displayed size of the dot d appears larger than dot c which appears larger than dot b.

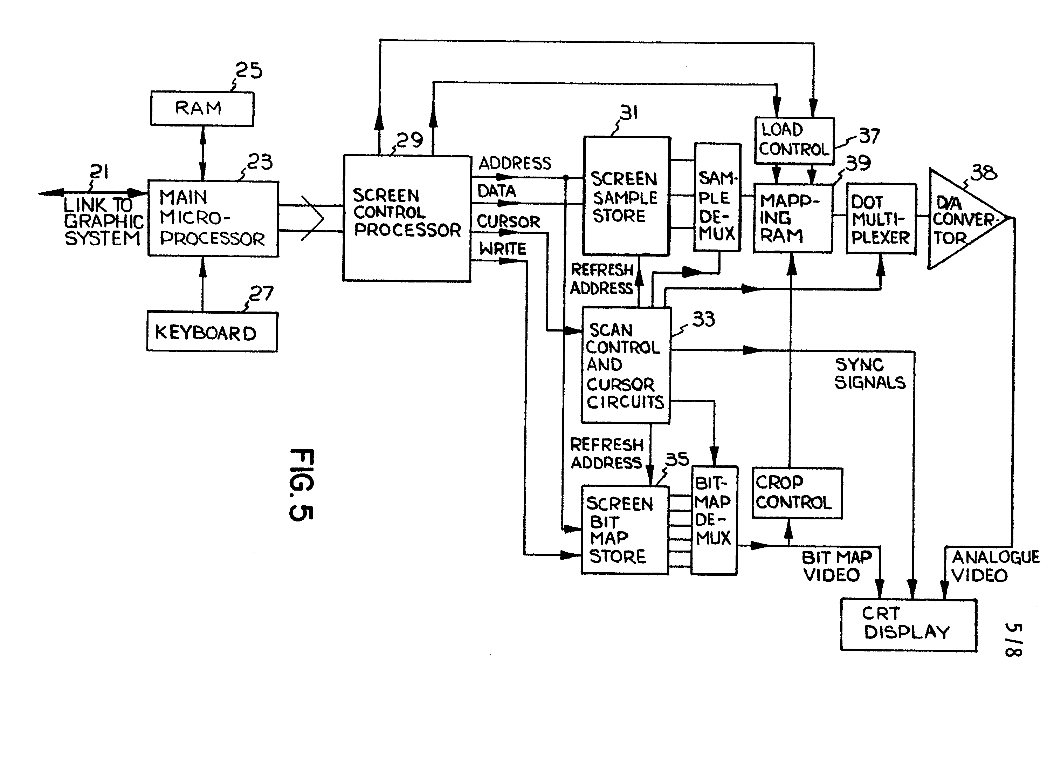

A system for producing the display shown in Fig. 2 by means of pulse modulation of the imaging means such as a CRT is shown in Fig. 5. The block diagram shows the system as may be contained within the terminal 1 shown in Fig. 1. But it should be understood that parts thereof can be placed in separate containers without departing from the invention thereof. The system is designated generally by the numeral 20 and contains an input 21 to a graphic system. That graphic system may include graphic scanners, typesetters and other units which may be assembled within a graphic system. A main microprocessor 23 is shown connected to the input 21. The main microprocessor 23 may be any commonly available system such as a Texas Instrument 9900 as is used in the preferred embodiment. It stores general data in a ram 25 both inputted from the link 21 and from a keyboard 27. The screen controlled processor 29 controls a bit map store 35 for the display of cursors and guide rules as well as nongraphic data such as scales. It also controls the location of the graphic information on the screen by controlling the loading of data into the screen sample store 31 and the mapping ram 39 as well as providing instructions to the scan control and cursor circuits 33. The screen control processor may be any suitable system such as the Atex 300, as used in the preferred embodiment.

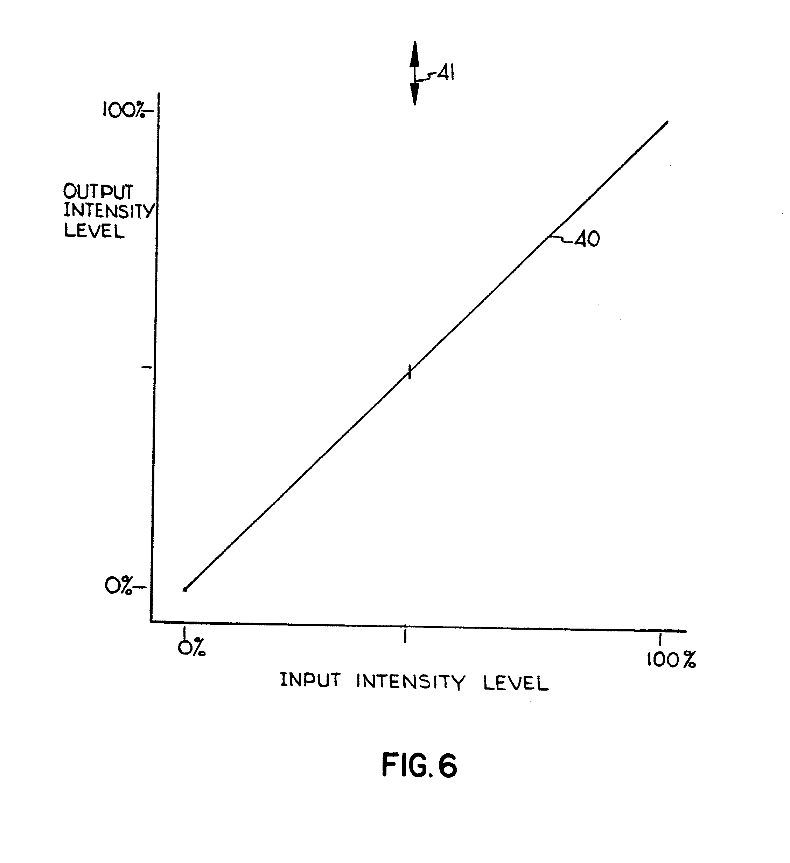

The data modulating the display shown in the preferred embodiment as a CRT is a 6 or 8 bit word expressing an intensity or modulation level. This word is processed through a D to A convertor 38, and modulates the intensity of the electron beam at each pixel location corresponding to a dot area. The modulating data as shown in Fig. 5 is an 8 bit word and which may also be expressed as a 6 bit word and which may also be expressed as a 6 bit word using the six most significant bits. The data is loaded by the screen control processor 29 and load control 37 into mapping ram 39. The mapping ram is an 8 x 64 bit ram providing 64 locations of 8 bits each. The addresses in the mapping ram corresponding to each of the stored 6 or 8 bit values are contained within the screen sample store 31 so that each of the intensity levels in the mapping ram 39 may be accessed by first accessing a location in the screen sample store containing the address for the data in the mapping ram 39. By providing an address to the screen sample store 31, which accesses a mapping ram address, one of the 64 intensity levels stored in the mapping ram is accessed and processed through the D to A convertor 38 for modulating the writing means or the CRT electronic beam. The selection of the address within the screen sample store for accessing the correct mapping ram address and the correct intensity value therein corresponding to a respective pixel is done by timing the accessing of the refresh address in the store 31 by the scan control and cursor circuits 33. The technique of timing, such as by using the X and Y address of the writing means, is well known and does not form part of the invention. The screen sample store 31 and mapping ram 39 are then a first store and a second store, respectively, which store data for modulating the display. Contained within the first store, the screen sample store 31, are the addresses for accessing the modulation levels or intensity levels comprised by the 6 or 8 bit binary values in the 64 address locations within the second store, the mapping ram 39. The screen sample store 31 reflects the size of the screen and each particular address in the screen sample store 31 is related to a pixel location on the display. However, the second store, the mapping ram 39, is considerably smaller and may be as small as the number of intensity levels needed for modulating the display. The data levels or intensity levels in the second store 39 are then accessed responsively to the addresses accessed from the first store 31 by the refresh address provided by the scan control and cursor circuits 33 responsive to the position of the electron beam writing means in the display. Additionally, a means (not shown) is provided for modifying the intensity levels in the mapping ram and which may vary the 8 bit level or convert 6 bit dots to 8 bit level, increasing the intensity resolution to the full capability or range of the mapping ram, namely, 256 separate intensity levels for the preferred embodiment. In order to explain the full capability of the mapping ram, it is assumed that the intensity levels are loaded into the mapping ram without modification from the screen control processor 29 and with a separate intensity level in each of the 64 address locations within the mapping ram 39. The relationship between the output and the input intensity would be a line at a 45° slope corresponding to a one-to-one correspondence between the input intensity levels and the output intensity levels from the mapping ram, as shown in Fig. 6. However, if the intensity levels first placed within the mapping ram are modified, the relationship between the input intensity and the output intensity would change. Where 64 discrete intensity levels are provided, then modification of any number of intensity levels, either one or all of the 64 intensity levels may be modified by modifying the respective intensity levels in the mapping ram 39. However, if the mapping ram were not used and if the intensity levels were stored in the screen sample store 31 corresponding to the number of pixels on the screen, a substantially larger number of intensity values would be stored and the data for each intensity level designated for change would have to be modified, requiring considerably more time. For example, if all intensity levels at 50% were to be varied to 55% gray, then only the one data word for the 50% intensity level in the mapping ram 39 is modified. But without the mapping ram the data stored in screen sample store 31 corresponding to each display occurrence or pixel for that gray tone would require modification to 55% gray accordingly.

If the intensity value at the mid range of the intensity curve shown as 40 in Fig. 6 was to be varied by increasing the output or decreasing the output intensity relative to the input intensity as shown by arrow 41, then that intensity level as expressed by the 6 or 8 bit word in the mapping ram 39 would be changed only once. However, if the intensity levels were not stored in the mapping ram but were stored in the screen sample store, then that intensity level would have to be changed for each of its occurrences on the CRT display. It can be seen by using mapping ram 39 and by using the screen sample store 31 as a source of addresses into the intensity levels in the mapping ram 39, then considerably less processing is required when altering the data in the mapping ram and the relationship between the input intensity and the output intensity. The intensity levels stored in the mapping ram 39 may also be used as an address data in the screen sample store for accessing data in the mapping ram so the intensity levels in store 31 produce the same data at the output of store 39.

An algorithm or program for varying the relationship between input and output intensity may be a linear or any other suitable relationship. According to the algorithm used in the preferred embodiment, the 64 separate levels expressed in a 8 bit byte, for example, has a resolution of 256 intensity levels. Where the intensity level data is first written into the mapping ram, it may be written as a 6 bit word, the two least significant bits being open for use later as described. As stated above, the mapping ram contains 64 separate intensity levels with the maximum resolution or range of intensity levels available being the 8 bit capability of the data word. As is known in the art, the storage capability can be increased to increase the number of separate discrete intensity levels as well as the range or resolution of the intensity levels.

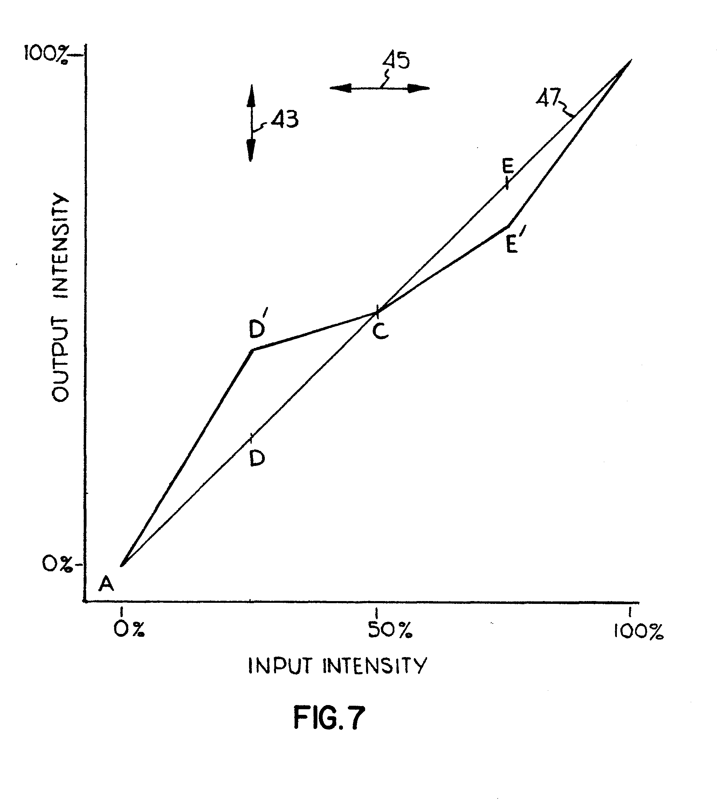

As shown for the preferred embodiment, the 64 separate intensity levels over an intensity range of Fig. 7 may be divided into points such as end points A and B, a midpoint C and quarter points D and E. Five points of the characteristic, i.e., black, shadow, midtone, high-light and white, may be adjusted for output level and intermediate points may be automatically adjusted accordingly by linear interpolation, or other suitable method. The positions of the 5 points along the input axis are also variable allowing, for example, the end points to be adjusted to achieve drop-out or fill-in. As is known in the art, the intensity curve showing the relationship between the input and output can be divided into more or less points. A suitable means known in the art can then be used to vary the relationship of each of the selected points to each other and the curve to vary the relationship between the input and output intensity. For example, each of the points may be moved to vary the relationship as shown by the arrows 43 and 45. As shown, by moving each of the points in the direction of the arrows, the relationship between the output level relative to the input level is changed. The curve 47 then may be modified so all the points on the curve between the points altered and the next adjacent point or points form a continuous curve. For the sake of explanation, a straight line curve is used. As shown, for example, where point D is moved up to increase the highlights at the lower end of the intensity range, to D', a new curve shape is generated from A to D' to C. As the lineal length of this new curve A to D' to C is longer than the original relationship expressed by A-D-C, a greater digital word resolution would be required to accommodate an increased number of intensity levels as between D' and C, separated by finer increments, and the 8 bit capability of the mapping ram would be utilized therefore. This would be for example where the slope of the curve, as between D' and C, is substantially less, or shallower, than the original curve, and requires 8 bits to express the smaller increments in the output intensity for each increment in the input intensity. Although the curves are shown as a straight line, it should be understood that any suitable algorithm could be substituted to make the curve second order or third order. As each intensity level in the mapping ram has a digital value, then by increasing or decreasing the transfer characteristic or the shape of the curve 47 expressing the transfer characteristic between input intensity and output intensity, the 8 bit data value can either be increased or decreased accordingly.

With each change to the levels within the mapping ram 39, a new curve is produced, describing a continuous relationship between each of the selected points A-E. New data is then written into the mapping ram corresponding to the output levels for each input level as modified by the new curve, as for example, A-D'-C-E'-B. The curve may also be discontinuous such as in the case of a staircase and may represent threshold levels producing constant output levels for a range of input levels.

In the preferred embodiment, the modification of the curve 47 is accomplished by a computer program. The program is not shown as it is well within the capability of one skilled in the art, given the disclosure herein. The new intensity values according to the modified curve are written into the mapping ram 39. It should be understood that any other suitable program could be used to fit a curve between the shifted points of curve 47 or a program could be used to shift each intensity value in the mapping ram according to any suitable algorithm. In this manner the change in the curve 47 as a whole could be specified rather than changing selected points and fitting a curve thereto. For example, where the curve represents an input-output transfer characteristic having a slope of 45°, an algorithm could be applied by a suitable program to increase or decrease the slope at selected areas or to make the curve of a higher order along its entire length or at selected areas.

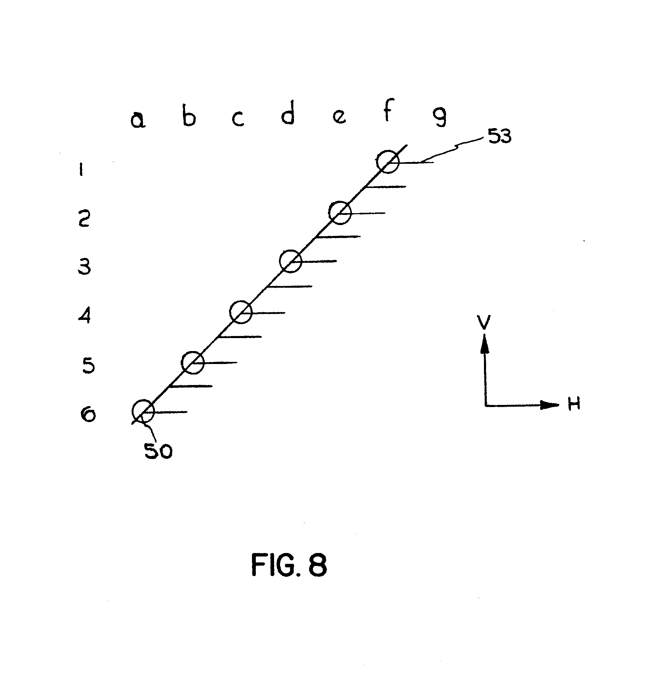

According to a further feature of the invention, a line graphic 53, an edge of which is shown as 50 displayed on the screen and passing through screen dot areas which for illustrative convenience are shown in grid form, comprising rows 1 to 7 and columns a to f. As can be seen, the edge 50 passes through a portion of the screen dot area producing a gray level which is proportional to the amount of the dot area covered. In this case, and according to another feature, the dot area intersected by an edge of a line graphic is intensity modulated to the gray level produced by that intersection. As can be seen in the example shown, dot area 1d is approximately 45% gray, dot area 2d is approximately 75% gray, dot area 3c is approximately 15% gray, dot area 4c is approximately 45% gray, dot area 5c is approximately 75% gray and so on. Because the display of line work does not require the angular display of the halftone dots as shown in Fig. 2, the line work pixel patterns may be arranged as shown in Fig. 8 with the pixels corresponding to the dots arranged in a 0° array relative to the vertical and horizontal orientation of display. The line graphic shown as 53 has an edge 50, intersection of the edge 50 with the pixels would require that the pixels be modulated to a 45% level in the case of area 1d, a 75% level in the case of area 2d, a 15% level in the case of area 3c, a 45% level in the case of 4c, 75% level in the case of area 5c, and so on. Since the line work is displayed at 0° raster, twice the number of dot areas are needed compared to the halftone display at 45°. The 8 bit resolution capability of the same store is then reduced to two words of 3 bits each providing 8 halftone levels for line work in place of the 256 gray levels. The same store may also be increased in size to increase the resolution for the increased number of pixel areas.

The inventive principles herein are as shown in Applicant's preferred embodiment and should not be thought of as limiting other applications of such principles.

CLAIMS:

1. A system for controlling the modulation of areas on a display comprising

(a) first and second means for storing data, said first store being larger than said second store

(b) said second means for storing data containing a set of modulation levels

(c) means for accessing said modulation levels in said second store responsive to said data in said first store.

2. The system of claim 1 wherein said second store is capable of storing a range of modulation levels and said modulation levels produced at the output of said second store is less than said range.

3. The system of claim 1 wherein said second store data is a plurality of intensity levels for modulating said display, said first store data being a plurality of addresses related to locations in said second store, and including

means for identifying areas within the display and accessing said data in said first store related to respective display areas,

means for accessing said intensity levels in said second store responsive to said first store data for modulating said respective display areas.

4. The system of claim 3 wherein said areas are halftone dot areas and including means responsive to said intensity levels for modulating said display.

5. The system of claim 1 including means for modifying said data in said second store, said modifying means being capable of modifying the modulation levels appearing on said display areas by modifying the said data in said second store.

6. The system of claim 5 wherein said means for modifying said second store data includes means for modifying selected data in said second store for respective mdoulation levels.

7. The system of claim 6 wherein said data in said second store is a plurality of intensity levels for modulating said display, said means for modifying includes means for varying the intensity levels in said second store, said intensity levels in said second store being related to said data in said first store by an input-output characteristic and said means for modifying said intensity levels varying said input-output characteristic.

8. The system of claim 7 wherein said means for modifying includes means for modifying selected intensity values in said second store for modifying respective points along said input-output characteristic and means for producing a new input-output characteristic curve joining said modified intensity levels and means responsive to said new input-output curve for writing new intensity levels in said second store indicative of said new curve.

9. The system of claim 7 wherein the intensity levels in said second store is related to said data in said first store by an input-output characteristic, said means for modifying includes means for modifying said input-output characteristic and for writing new intensity values into said second store corresponding to said new input-output characteristic.

10. The system of claim 8 where said points are the end points of the input-output characteristic, and said means for joining said modified points by a curve, producing a plurality of intensity values, related to said modified end points on said new input-output characteristic according to a predetermined relationship.

11. The system of claim 10 where said predetermined relationship is a linear relationship.

12. The system of claim 10 where said predetermined relationship is a second or higher order relationship.

13. The system of claim 10 where said relationship is a discontinuous relationship.

0095716

I/8

FIG. 1

FIG. 2

FIG. 3

0095716

4/8

FIG. 4

FIG.5

FIG.6

0095716

FIG.7

FIG. 8